# EUROPEAN PATENT SPECIFICATION

(11) **EP 2 821 620 B1**
(45) Date of publication and mention of the grant of the patent: **25.04.2018**
(21) Application number: 13175173.7
(22) Date of filing: 04.07.2013
(51) Int. Cl.: F02C 6/12, F02B 37/18

(54) **TURBOCHARGER**
TURBOLADER
TURBOCOMPRESSEUR

(43) Date of publication of application: 07.01.2015
(73) Proprietor: Bosch Mahle Turbo Systems GmbH & Co. KG, 70376 Stuttgart (DE)
(72) Inventor: Thangavelu, Kanagaraj, 641047 Tamil Nadu (IN)
(74) Representative: BRP Renaud & Partner mbB Rechtsanwälte Patentanwälte Steuerberater

(56) References cited:
- GB-A- 2 311 556
- JP-A- S5 828 561

## Description

The invention relates to a turbocharger according to the preamble of claim 1 as well as to a turbocharged combustion engine according to the preamble of claim 6. In automotive engineering, by turbocharger, turbo supercharger, or turbo is meant a forced induction device employed to allow more power to be generated by an internal combustion engine of any given size. A turbocharged internal combustion engine can operate more efficiently than a conventional, naturally aspirated engine as the turbine allows forcing an increased amount of air, accompanied by proportionately more fuel, into the combustion chamber than atmospheric pressure alone.

The state of the art specifically comprises turbocharged engines for use with trucks, cars, trains, and miscellaneous construction equipment. Turbochargers have become particularly popular where combined with Otto cycle and Diesel cycle internal combustion engines. They have also been found useful in automotive fuel cells.

A common challenge in state-of-the-art turbocharged systems is the control of maximum boost pressure, which is required to protect the engine and the turbocharger itself throughout their respective lifecycles. To this end, turbocharged engine systems have been disclosed that comprise a valve for diverting exhaust gases away from the turbine wheel. Such device is recognized in the art as a waste gate. A conventional waste gate regulates the exhaust gas flow that enters the exhaust-side driving turbine along with the resulting air intake and degree of boosting.

To control the waste-gate valve position, turbocharged production vehicles are known to use a variety of control mechanisms. The simplest control for a waste gate is a mechanical linkage that allows the operator to directly control the valve. Such manual control is used in some turbo-charged light aircraft. A more sophisticated closed-loop approach is to supply boost pressure directly from the charge air side to the waste-gate actuator. In such an embodiment, a small hose may connect from the turbocharger centrifugal compressor outlet, charge pipes, or intake manifold to a nipple on the waste-gate actuator. As a result, the waste gate will open further as boost pressure builds up against the force of a spring in the waste-gate actuator. The gate continues to open until equilibrium is eventually obtained.

This known approach bears the disadvantage of being unable to respond to an increase in rotational speed of the turbocharger shaft. Instead, the pneumatic actuator solely depends on a change in boost pressure to control the waste gate accordingly.

Prior art turbochargers with waste gate control system are disclosed in documents GB2311556 and JPS5828561.

It is thus an object of the invention to provide a turbocharger capable of responding to both an increase in boost pressure and to an increase in rotational speed of the turbocharger shaft. It is a further object of the invention to provide a turbo-charged internal combustion engine comprising a turbocharger with such capability.

These objects are achieved by means of a turbocharger comprising the features of claim 1 and by means of a combustion engine comprising the features of claim 6. A basic idea of the invention is to equip the turbocharger with a solenoid suitably configured to respond to the rotational speed of the turbocharger. This solenoid advantageously adds to the flexibility of the overall arrangement.

More specifically, the actuator comprises a rod in communication with a conventional pneumatic pressure plate positioned in the intake gas flow and responsive to the latter's boost pressure. Furthermore, the actuator rod is influenced by means of the inventive solenoid in response to said rotational speed. Such arrangement of plate, solenoid, and rod is adapted in a way as to allow the individual forces applied to the rod by the plate and solenoid to act together to operate the gate.

In the configuration described, the actuator, by means of its rod, not only responds to any change in the boost pressure exerted on the intake gas by the turbocharger's centrifugal compressor. Rather, operation of the waste gate through the actuator depends on both this pneumatic mechanism as well as the rotational speed of the turbocharger arrangement. This flexible setup not only increases the lifetime of the apparatus, but also potentially improves performance of an internal combustion engine thus turbocharged. These advantages may be brought about with very little overhead caused by the additional solenoid and speed sensor required.

In a preferred embodiment, the actuator is equipped with a preload spring connected to the rod so as to preload the latter against the pressure plate and solenoid. This configuration enables the skilled person to control the minimum boost pressure necessary to open the waste gate through simple constructive measures aiming to modify the counterforce exerted by the preload spring on the actuator rod.

In particular, the solenoid may be configured to apply a force that is approximately equivalent to 30 % of the preload exerted by the spring. This measure of force provides for a well-balanced influence of the pressure plate and solenoid on the rod.

To allow for a precise and straightforward measurement, the rotational-speed sensor operating the actuator is positioned in direct vicinity to the centrifugal compressor. Hence, the readings supplied by the speed sensor can be relied upon to be based solely on centrifugal compressor speed and insensitive to external influence. The rotational-speed sensor is connected to the solenoid by means of a device known in automotive engineering as an electronic control unit. The use of an electronic control unit allows enriching the rotational speed measured with additional data from a multitude of sensors within the engine bay, interpreting the data using multidimensional performance maps-recognized in the art as lookup tables-and adjusting the engine actuators in accordance with the results thus obtained.

Specifically, the electronic control unit is configured to energize and de-energize the solenoid according to a predefined target speed range of the compressor. The electronic control unit is programmed to activate the solenoid when the rotational speed reported by the rotational-speed sensor exceeds a certain threshold, deactivating it when said speed drops below a further threshold.

Other important features and advantages of the invention may be gathered from the dependent claims, drawings, and corresponding description based on the drawings.

It is understood that the above-mentioned features and other features to be explained can be used not only in the combination given, but also independently or in different combinations without departing from the scope of the present invention.

Preferred embodiments of the invention are illustrated in the drawings and will be further detailed by means of the following description, with corresponding reference numerals referring to identical or similar or functionally identical components, wherein
- Fig. 1: shows a partial section of a turbocharger according to an embodiment and
- Fig. 2: shows a magnified detail of the turbocharger according to the embodiment.

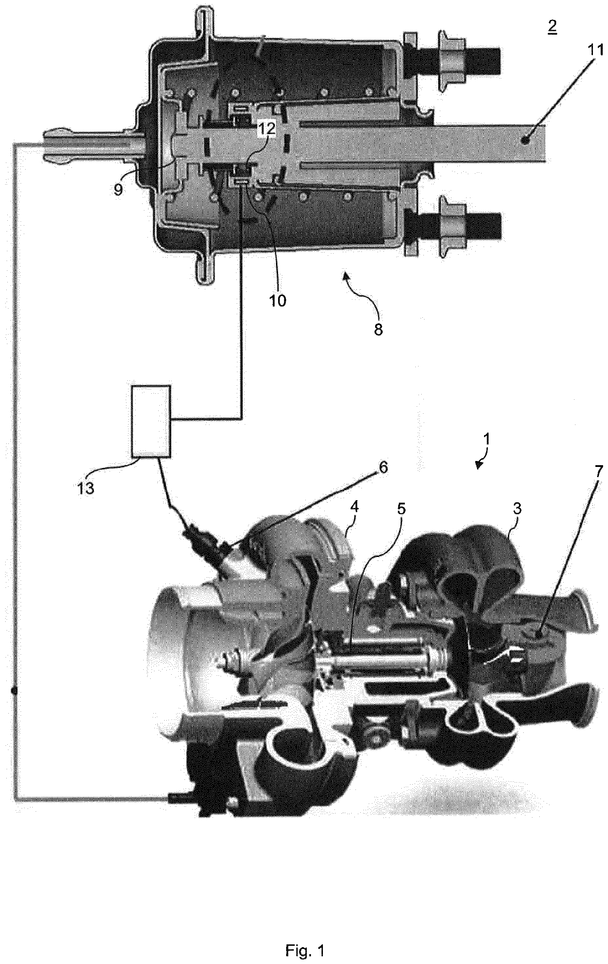

Figure 1 is a partial section of a turbocharged internal combustion engine 2, as is commonly used for mobile propulsion in vehicles and portable machinery. The internal combustion engine 2 comprises a combustion chamber (not depicted) as an integral part of a working fluid flow circuit into which a turbocharger 1 is embedded. Within this circuit, the turbocharger is employed to improve the so-called volumetric efficiency of the internal combustion engine 2 by increasing density of an intake gas, such as ambient air, inhaled by the combustion chamber by the downward stroke of a piston. To this end, the turbocharger 1 comprises a centrifugal compressor 4 that draws the intake gas into the turbocharger 1, compresses it, and boosts the gas into an intake manifold of the combustion chamber at its increased pressure, resulting in a greater mass of gas entering the cylinder on each stroke.

The turbocharger 1 of the internal combustion engine 2 further comprises an exhaust gas turbine 3, taking the form of a radial inflow turbine, to derive the power needed to spin the centrifugal compressor 4 by recovering the kinetic waste energy embodied in the engine's exhaust gases. For this purpose, a driveshaft 5 of the turbocharger 1 connects the exhaust gas turbine 3 to an impeller of the centrifugal compressor 4, setting the latter into a rotational motion by means of the waste energy extracted from the exhaust gases. A center hub rotating assembly (CHRA) houses the driveshaft 5 and contains a bearing system to suspend the driveshaft 5, allowing it to rotate at very high speed with minimal friction. Additional components such as intercooling or blow-off valves may optionally enhance the turbocharger 1.

In the embodiment at hand, a suitable rotational-speed sensor 6 such as a wheel impulse generator (WIG), speed probe, or tachometer, is integrated into a housing of the turbocharger 1 next to the impeller of the centrifugal compressor 4. For instance, the rotational-speed sensor 6 may take the form of a Hall effect sensor, using a rotating target such as a magnet or toothed wheel attached to the centrifugal compressor 4 or driveshaft 5. In such embodiment, the rotational motion of the centrifugal compressor 4 varies the flux density of a magnet inside a head of the rotational-speed sensor 6, which is mounted at a precise distance from the target wheel and detects the teeth or magnet passing the rotational-speed sensor 6.

In an alternative embodiment (not depicted), the rotational-speed sensor 6 may make use of an opto-isolator completely encased to prevent ingress from the turbocharger environment. In such embodiment, among the only exposed parts of the rotational-speed sensor 6 are a sealed plug connector and a drive fork attached to a slotted disk internally through a bearing and seal. This slotted disk is typically sandwiched between two circuit boards containing a photo-diode, phototransistor, amplifier, and filtering circuits to produce a square wave pulse train output.

In either case, in the embodiment at hand, the output signal of the rotational-speed sensor 6 is fed into an electronic control unit 13 embedded in the internal combustion engine 2. More specifically, the electronic control unit 13 takes the form of an engine control unit most commonly called a powertrain control module (PCM), that is, a type of electronic control unit that controls a series of actuators of the internal combustion engine 2 to ensure optimum running condition. In this context, the electronic control unit 13, inter alia, serves to manage a waste gate 7 by means of an actuator 8 mechanically linked to its valve through an actuator rod 11.

In addition to the signal connection between the rotational-speed sensor 6 and the electronic control unit 13, a fluid communication between the centrifugal compressor 4 and the actuator 8 is established by means of a hose attached to the compressor's gas outlet. On the opposite end of the hose, a pressure plate 9 mechanically linked to the rod 11 is exposed to the boost pressure of the intake gas leaving the hose, forcing the waste gate 7 to open further as boost pressure pushes against the force of a preload spring 12 that aims to keep the waste gate 7 closed.

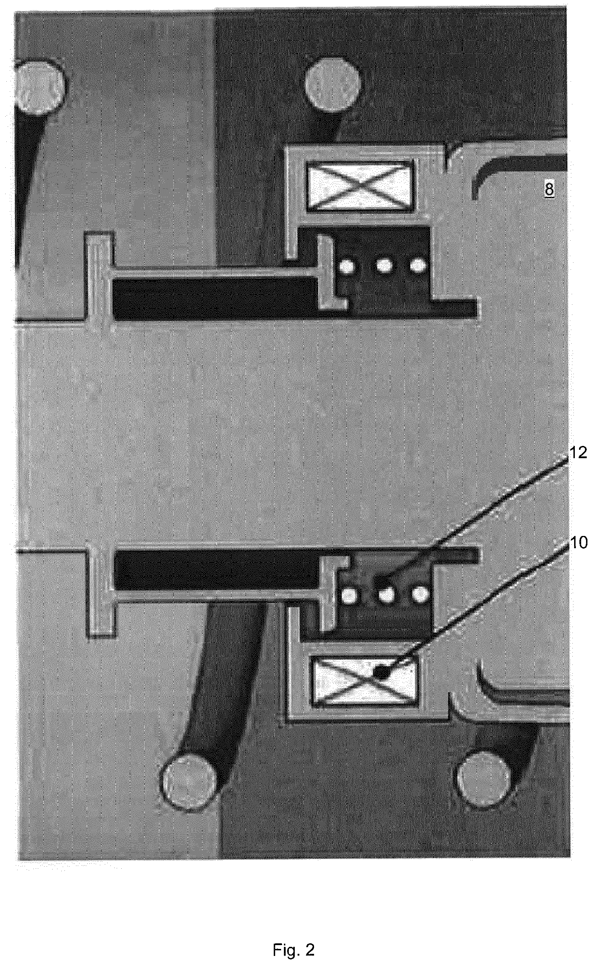

As Figure 2 illustrates in further detail, a solenoid 10 aids the pressure plate 9 in its struggle against the preload spring 12. Used herein according to the terminology of physical science, the term "solenoid" is meant to refer to any long, thin loop of wire, optionally wrapped around a metallic core, able to produce a uniform magnetic field in a volume of space when an electric current is passed through it. In the given embodiment, the solenoid 10 takes the form of an electromechanical solenoid consisting of an electromagnetically inductive coil, wound around a movable steel or iron slug termed an "armature". Said coil is shaped such that the armature can be moved in and out of the center, altering the coil's inductance and thereby acting on the rod 11 as an electromagnet. To enable the solenoid 11 to be operated by the electronic control unit 13, the latter is connected to the coil by means of an electrical wiring, allowing the electronic control unit 13 to regulate the flow of electric current as needed.

## Claims

1. Turbocharger (1) for an internal combustion engine (2) comprising
- an exhaust gas turbine (3) for extracting kinetic energy from a flow of exhaust gas exhausted from a combustion chamber of the internal combustion engine (2),
- a centrifugal compressor (4) for exerting a boost pressure on an intake gas taken in by the combustion chamber,
- a driveshaft (5) for setting the centrifugal compressor (4) into a rotary motion by means of the kinetic energy, the driveshaft (5) rotatably mounted between the exhaust gas turbine (3) and the centrifugal compressor (4),
- a rotational-speed sensor (6) for sensing a rotational speed of the rotary motion,
- a waste gate (7) for regulating the flow of exhaust gas, and
- an actuator (8) for controlling the waste gate (7),
wherein the actuator (8) comprises,
- a pressure plate (9) in pneumatic communication with the centrifugal compressor (4) and responsive to the boost pressure of the intake gas,
- a solenoid (10) in signal communication with the rotational-speed sensor (6) and responsive to the rotary motion of the centrifugal compressor (4), and
- a rod (11) in mechanical communication with the pressure plate (9), in magnetic communication with the solenoid (10), and configured to actuate the waste gate (7) by means of a combined force exerted by the pressure plate (9) and the solenoid (10),
wherein the turbocharger (1) comprises an electronic control unit (13) in signal communication with the rotational-speed sensor (6) and the solenoid (10), **characterized in that**
the electronic control unit (13) is configured to energize the solenoid (10) in response to the rotational speed exceeding a predetermined threshold.

2. Turbocharger (1) according to claim 1,
**characterized in that**
the actuator (8) further comprises a preload spring (12) in mechanical communication with the rod (11) for exerting a preload force on the rod (11), the preload force counter to the combined force exerted by the pressure plate (9) and the solenoid (10).

3. Turbocharger (1) according to claim 2,
**characterized in that**
the solenoid (10) is configured to exert a solenoid force amounting to approximately 30 % of the preload force.

4. Turbocharger (1) according to any of claims 1 to 3,
**characterized in that**
the rotational-speed sensor (6) is mounted in proximity to the centrifugal compressor (4).

5. Turbocharger (1) according to any of claims 1 to 4,
**characterized in that**
the electronic control unit (13) is further configured to de-energize the solenoid (10) in response to the rotational speed reducing.

6. Internal combustion engine (2) comprising a combustion chamber for combusting a fuel by means of an intake gas and exhausting an exhaust gas and a turbocharger (1) according to one of claims 1 to 5.

## Patentansprüche

1. Turbolader (1) für eine Brennkraftmaschine (2) umfassend
- eine Abgasturbine (3) zum Extrahieren kinetischer Energie aus einem Abgasstrom, der aus einem Brennraum der Brennkraftmaschine (2) abgeführt wird,
- einen Kreiselverdichter (4) zum Ausüben eines Ladedrucks auf ein Ansauggas, das von dem Brennraum angesaugt wird,
- eine Antriebswelle (5) zum Einstellen des Kreiselverdichters (4) in eine Drehbewegung mittels der kinetischen Energie, wobei die Antriebswelle (5) zwischen der Abgasturbine (3) und dem Kreiselverdichter (4) drehbar gelagert ist,
- einen Drehzahlsensor (6) zum Erfassen einer Drehzahl der Drehbewegung,
- ein Wastegate (7) zum Regulieren des Abgasstroms, und
- einen Aktuator (8) zum Steuern des Wastegates (7),
wobei der Aktuator (8) umfasst,
- eine Druckplatte (9), die mit dem Kreiselverdichter (4) in pneumatischer Verbindung steht und auf den Ladedruck des Ansauggases anspricht,
- ein Solenoid (10), das mit dem Drehzahlsensor (6) in Signalverbindung steht und auf die Drehbewegung des Kreiselverdichters (4) anspricht, und
- eine Stange (11), die mit der Druckplatte (9) in mechanischer Verbindung steht, mit dem Solenoid (10) in magnetischer Verbindung steht und konfiguriert ist, das Wastegate (7) mittels einer kombinierten Kraft zu betätigen, die von der Druckplatte (9) und dem Solenoid (10) ausgeübt wird,
wobei der Turbolader (1) eine elektronische Steuereinheit (13) umfasst, die mit dem Drehzahlsensor (6) und dem Solenoid (10) in Signalverbindung steht,
**dadurch gekennzeichnet, dass**
die elektronische Steuereinheit (13) konfiguriert ist, das Solenoid (10) als Reaktion darauf, dass die Drehzahl einen vorbestimmten Schwellenwert überschreitet, einzuschalten.

2. Turbolader (1) nach Anspruch 1,
**dadurch gekennzeichnet, dass**
der Aktuator (8) weiter eine Vorspannfeder (12) umfasst, die mit der Stange (11) zum Ausüben einer Vorspannkraft auf die Stange (11) in mechanischer Verbindung steht, wobei die Vorspannkraft der kombinierten Kraft entgegenwirkt, die von der Druckplatte (9) und dem Solenoid (10) ausgeübt wird.

3. Turbolader (1) nach Anspruch 2,
**dadurch gekennzeichnet, dass**
das Solenoid (10) konfiguriert ist, eine Solenoidkraft auszuüben, die ungefähr 30 % der Vorspannkraft beträgt.

4. Turbolader (1) nach einem der Ansprüche 1 bis 3,
**dadurch gekennzeichnet, dass**
der Drehzahlsensor (6) in der Nähe des Kreiselverdichters (4) angebracht ist.

5. Turbolader (1) nach einem der Ansprüche 1 bis 4,
**dadurch gekennzeichnet, dass**
die elektronische Steuereinheit (13) weiter konfiguriert ist, das Solenoid (10) als Reaktion auf eine Verringerung der Drehzahl abzuschalten.

6. Brennkraftmaschine (2) umfassend einen Brennraum zum Verbrennen eines Brennstoffs mittels eines Ansauggases und zum Ausstoßen eines Abgases und einen Turbolader (1) nach einem der Ansprüche 1 bis 5.

## Revendications

1. Turbocompresseur (1) pour un moteur à combustion interne (2) comprenant :
- une turbine à gaz d'échappement (3) pour extraire de l'énergie cinétique d'un flux de gaz d'échappement déchargé d'une chambre de combustion du moteur à combustion interne (2),
- un compresseur centrifuge (4) pour exercer une surpression sur un gaz d'entrée recueilli par la chambre de combustion,
- un arbre d'entraînement (5) pour placer le compresseur centrifuge (4) dans un mouvement rotatif au moyen de l'énergie cinétique, l'arbre d'entraînement (5) étant monté à rotation entre la turbine à gaz d'échappement (3) et le compresseur centrifuge (4),
- un capteur de vitesse de rotation (6) pour capter une vitesse de rotation du mouvement rotatif,
- une décharge (7) pour réguler le flux de gaz d'échappement et
- un actionneur (8) pour commander la décharge (7),
dans lequel l'actionneur (8) comprend :
- une plaque de pression (9) en communication pneumatique avec le compresseur centrifuge (4) et sensible à la surpression du gaz d'entrée,
- un solénoïde (10) en communication de signal avec le capteur de vitesse de rotation (6) et sensible au mouvement rotatif du compresseur centrifuge (4) et
- une tige (11) en communication mécanique avec la plaque de pression (9), en communication magnétique avec le solénoïde (10) et configurée pour actionner la décharge (7) au moyen d'une force combinée exercée par la plaque de pression (9) et le solénoïde (10),
dans lequel le turbocompresseur (1) comprend une unité de commande électronique (13) en communication de signal avec le capteur de vitesse de rotation (6) et le solénoïde (10),
**caractérisé en ce que** :
l'unité de commande électronique (13) est configurée pour exciter le solénoïde (10) en réponse à la vitesse de rotation qui dépasse un seuil prédéterminé.

2. Turbocompresseur (1) selon la revendication 1,
**caractérisé en ce que** :
l'actionneur (8) comprend en outre un ressort de préchargement (12) en communication mécanique avec la tige (11) pour exercer une force de préchargement sur la tige (11), la force de préchargement s'opposant à la force combinée exercée par la plaque de pression (9) et le solénoïde (10).

3. Turbocompresseur (1) selon la revendication 2,
**caractérisé en ce que** :
le solénoïde (10) est configuré pour exercer une force du solénoïde s'élevant à environ 30 % de la force de préchargement.

4. Turbocompresseur (1) selon l'une quelconque des revendications 1 à 3, **caractérisé en ce que** :
le capteur de vitesse de rotation (6) est monté à proximité du compresseur centrifuge (4).

5. Turbocompresseur (1) selon l'une quelconque des revendications 1 à 4, **caractérisé en ce que** :
l'unité de commande électronique (13) est en outre configurée pour désexciter le solénoïde (10) en réponse à la réduction de la vitesse de rotation.

6. Moteur à combustion interne (2) comprenant une chambre de combustion pour brûler un combustible au moyen d'un gaz d'admission et décharger un gaz d'échappement et un turbocompresseur (1) selon l'une quelconque des revendications 1 à 5.
